(19) Europäisches Patentamt / European Patent Office / Office européen des brevets

(11) **EP 3 816 193 A1**

(12) **EUROPEAN PATENT APPLICATION**

(43) Date of publication:
**05.05.2021 Bulletin 2021/18**

(51) Int Cl.:
**C08B 31/08** (2006.01)      **C04B 24/38** (2006.01)
**C08B 31/12** (2006.01)      **C08L 3/08** (2006.01)

(21) Application number: **20182236.8**

(22) Date of filing: **25.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2019 CN 201911031759**

(71) Applicant: **Shandong Eton New Material Co., Ltd. Feicheng City (CN)**

(72) Inventors:
• **TENG, Kun**
  **Tai'an, Shandong (CN)**
• **ZHAO, Ming**
  **Tai'an, Shandong (CN)**
• **LI, Qinghua**
  **Tai'an, Shandong (CN)**
• **LI, Changyin**
  **Tai'an, Shandong (CN)**
• **LI, Maofeng**
  **Tai'an, Shandong (CN)**
• **ZHAO, Hongshan**
  **Tai'an, Shandong (CN)**
• **ZHANG, Kaimin**
  **Tai'an, Shandong (CN)**

(74) Representative: **Stuttard, Garry Philip**
**Urquhart-Dykes & Lord LLP**
**Arena Point**
**Merrion Way**
**Leeds LS2 8PA (GB)**

(54) **PREPARATION METHOD OF MODIFIED STARCH ETHER FOR IMPROVING OPEN TIME OF CERAMIC TILE ADHESIVE**

(57) The present invention relates to the technical field of building additives, and in particular to a preparation method of modified starch ether for improving the open time of a ceramic tile adhesive. The method includes (1) chemical modification: mixing starch, alkalizer, alcohol and inhibitor, then adding a plurality of etherifying agents, and conducting etherification at 10°C to 90°C for 2 h to 20 h to achieve the chemical modification and obtain starch ether; and (2) physical modification: mixing the starch ether obtained in step (1), thickener, retarder and water reducer for a certain period of time to achieve the physical modification. The modified starch ether prepared by the preparation method is used in a ceramic tile adhesive to significantly improve the binding performance and the open time of the ceramic tile adhesive, which cannot be achieved by the existing starch ether products and methods.

EP 3 816 193 A1

**Description**

TECHNICAL FIELD

The present invention relates to the technical field of building additives, and in particular to a preparation method of modified starch ether for improving the open time of a ceramic tile adhesive.

BACKGROUND

As a decorative material, ceramic tile has a broad market. Generally, a ceramic tile adhesive, mixed with water, should be used for construction preferably within a certain period of time, which requires a slower curing and a longer open time for the ceramic tile adhesive. Ideally, a fixed ceramic tile is expected to tightly adhere to an object without falling off, which requires a higher tensile adhesive strength for the ceramic tile adhesive. As a higher and higher degree of specialization is achieved in the ceramic tile market, there is an increasing demand for ceramic tile adhesives with a longer open time. Since traditional ceramic tile adhesives can hardly meet the requirements, novel ceramic tile adhesives are booming.

A novel ceramic tile adhesive composition includes cement, sand, heavy calcium carbonate, redispersible latex powder, cellulose ether, lignocellulose and the like. Chinese patent CN107573539A discloses a modified cellulose ether for improving the open time of a ceramic tile adhesive. Cellulose ether, used as a thickening water-retaining agent in the building field, works well in improving the open time of a ceramic tile adhesive. The starch ether used in the modification for cellulose ether is hydroxypropyl starch. Cellulose ether and starch ether are polysaccharide molecules. Generally, more hydrophilic substituents in the polysaccharide molecule means a stronger ability to retain moisture, leading to delayed hydration of cement particles, slower curing of ceramic tile adhesive, and thus longer open time. However, hydroxypropyl starch, with only one hydrophilic group, is inferior to modified starch ether having a plurality of hydrophilic groups in terms of hydrophilicity. Therefore, the synergistic effect of the combination of cellulose ether and a single starch ether is limited to a certain extent, and only a weak water retention can be achieved, meeting the basic requirement of open time ≥ 20 min in JC/T547-2005, but hardly fulfilling the requirements of longer open time for a ceramic tile adhesive.

Starch ether, also called etherified starch, is a general term for a type of modified starch including an ether linkage. Starch ether is a substituted starch ether produced by the reaction of the hydroxyl in a starch molecule with a reactive substance, including hydroxyalkyl starch, carboxymethyl starch, cationic starch, or the like, and is widely used in building, medicine, food, textile, papermaking, daily chemicals, petroleum, and other industries. Starch ether, used as an additive for a cement-based product, a gypsum-based product and a limestone product in the building field, has a prominent compatibility with other building additives, and is especially suitable for dry blends in building, such as mortar, adhesive, plaster, and a material applied by rolling. The aforementioned starch ether with only one hydrophilic group is limited in application due to its lower hydrophilicity than modified starch ether with a plurality of hydrophilic groups. Moreover, it requires an open time ≥ 30min in JC/T547-2005, but this standard cannot be satisfied by using the existing commercially-available starch ether in the production of a ceramic tile adhesive. Therefore, it is contemplated that the structure and properties of starch ether can be improved by a specific method, such as modifying, to meet the requirement of longer open time, without compromising properties of a ceramic tile adhesive, such as binding, and increasing the cost.

However, the existing methods for preparing a starch ether product mostly include multi-step etherification. These methods are cumbersome and not conducive to industrial production, and generally only involve chemical modification. As a ceramic tile adhesive requires a longer open time, there is an urgent need to provide modified starch ether achieving longer open time at low cost by improving the preparation method thereof.

SUMMARY

In order to overcome the shortcomings of the prior art, the present invention provides a preparation method of modified starch ether for improving the open time of a ceramic tile adhesive. The modified starch ether prepared by the method is used in a ceramic tile adhesive to significantly improve the binding performance and the open time of the ceramic tile adhesive, which cannot be achieved by the existing starch ether products and methods. Therefore, the problems in the prior art are solved.

The present invention is implemented by the following technical solutions.

A preparation method of modified starch ether for improving the open time of a ceramic tile adhesive includes the following steps:

(1) chemical modification
mixing starch, alkalizer, alcohol and inhibitor, then adding a plurality of etherifying agents, and conducting etherification at 10°C to 90°C for 2 h to 20 h to achieve the chemical modification and obtain starch ether; and

(2) physical modification
mixing the starch ether obtained in step (1), thickener, retarder and water reducer for a certain period of time to achieve the physical modification.

The etherification is conducted at 15°C to 85°C for 4 h to 12 h.

The etherification is conducted first at a lowered temperature for a certain period of time, and then conducted in stages at different raised temperatures.

The etherification is conducted first at a lowered temperature of 10°C to 20°C for 1.5 h to 2.5 h, then at a raised temperature of 35°C to 50°C for 2 h to 3 h, and then at a further raised temperature of 60°C to 70°C for 4 h to 5 h.

The starch, the alkalizer and the etherifying agent are used in etherification at a mass ratio of 1:(0.01-1.5):(0.02-1.75), and preferably, at a mass ratio of 1:(0.01-1):(0.02-1.2); the starch and the inhibitor are used in etherification at a mass ratio of 1:(0.05-0.1); and the starch and the alcohol are used in etherification at a mass ratio of 1:(0.1-2), and preferably, at a mass ratio of 1:(0.2-1).

The physical modification is conducted by mixing the starch ether, thickener, retarder and water reducer for 40 min to 60 min.

The starch ether, thickener, retarder and water reducer, in percentage by weight, are 5% to 40%, 56% to 94%, 0.5% to 2%, and 0.5% to 2% respectively, preferably, 10% to 30%, 56% to 88%, 1.0% to 2.0%, and 1.0% to 2.0% respectively, and more preferably, 20% to 30%, 56% to 78%, 1.0% to 2.0%, and 1.0% to 2.0% respectively.

The starch ether is one or more of monosubstituted starch ether (with one substituent, such as carboxymethyl starch, hydroxypropyl starch, and hydroxyethyl starch), disubstituted starch ether (with two substituents, such as carboxymethyl hydroxypropyl starch, hydroxypropyl hydroxyethyl starch, and carboxymethyl hydroxyethyl starch), and trisubstituted starch ether (with three substituents, such as carboxymethyl hydroxypropyl hydroxyethyl starch, hydroxypropyl hydroxyethyl ethyl starch, and hydroxypropyl hydroxyethyl methyl starch), and preferably one or two of disubstituted starch ether and trisubstituted starch ether; the thickener is one or more of carboxymethyl cellulose, methyl cellulose, hydroxypropyl methyl cellulose, hydroxyethyl methyl cellulose, and hydroxyethyl cellulose, and preferably one or two of hydroxypropyl methyl cellulose and hydroxyethyl methyl cellulose; the retarder is one or more of sodium lignosulfonate, sugar calcium and sodium citrate, and preferably sodium lignosulfonate; and the water reducer is one or more of naphthalene, aliphatic and polycarboxylate water reducers in the form of power, and preferably a polycarboxylate water reducer in the form of power.

The starch is one or more of corn starch, tapioca starch, potato starch, and wheat starch, preferably one or more of corn starch, tapioca starch, and potato starch, and more preferably tapioca starch; the alkalizer is alkali metal hydroxide powder, preferably NaOH and/or KOH, and more preferably NaOH; the alcohol is one or more of methanol, ethanol, isopropanol, n-butanol, tert-butanol, acetone, and diethylene glycol, preferably ethanol and/or isopropanol, and more preferably ethanol; the inhibitor is an alkali metal salt, preferably $Na_2SO_4$ and/or NaCl, and more preferably $Na_2SO_4$; and the etherifying agent is one or more of chloroacetic acid, sodium chloroacetate, methyl chloride, ethyl chloride, propylene oxide, and ethylene oxide, and preferably one or more of chloroacetic acid, propylene oxide, and ethylene oxide.

The present invention further provides a modified starch ether prepared by the above preparation method.

The present invention further provides use of the modified starch ether in the preparation of a ceramic tile adhesive.

The modified starch ether weighs 0.2% to 0.5%, and preferably 0.3% to 0.5%, of the ceramic tile adhesive.

The beneficial effects of the present invention are as follows:
The modified starch ether prepared by the preparation method provided in the present invention is used in a ceramic tile adhesive, resulting in a significant improvement in the open time of the ceramic tile adhesive compared to the prior art. In the preparation method of the invention, raw starch is chemically modified with a plurality of hydrophilic etherifying agents to obtain hydrophilic starch ether, and then the hydrophilic starch ether is physically mixed with an appropriate amount of thickener, retarder and water reducer to obtain modified starch ether. The hydrophilic starch ether and a hydrophilic thickener are mixed to produce a synergistic effect for improving the water retention, and then a hydrophilic retarder (sodium lignosulfonate) and a water reducer (polycarboxylate water reducer in the form of power) are added to further improve the water retention. Therefore, the hydration of cement particles is delayed, the curing of ceramic tile adhesive is slowed, the open time is extended, and the strength and the binding property are intensified. The preparation process of the present invention from raw starch to modified starch ether does not require water. The water in the raw starch is used as a solvent for alkalizer, and a minimum amount of alcohol is used as a dispersant for alkalizer, thereby avoiding the use of a large amount of alcohol and water in the preparation of modified starch ether by a traditional method. The alcohol and etherifying agent are recovered for reuse during the drying process after reaction. Since the product does not need to be washed and neutralized, the process of preparing modified starch ether is greatly simplified compared to a traditional method. With simple process and equipment, easy operation and no three wastes, this method is environmentally friendly. The obtained modified starch ether has a stable quality and a function of improving the open time of a ceramic tile adhesive, and can meet demands from different consumers, thus enjoying a wider market.

The preparation method of the present invention is significantly different from the existing modification methods in terms of operating conditions. Especially, the chemical modification can be conducted at a temperature below 35°C in the present invention, while the chemical modification is generally conducted at a temperature above 35°C in existing methods. The lower temperature in the early stage of reaction can ensure the sufficient dispersion of materials, and improve the etherification efficiency of a single etherifying agent and the reaction safety, resulting in lower requirements for operation, simple process, fewer resources, and less energy.

## BRIEF DESCRIPTION OF DRAWINGS

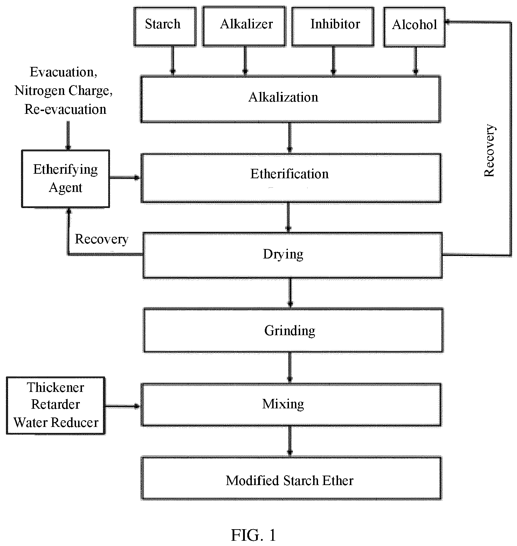

FIG. 1 is a flowchart of a process according to the present invention.

## DETAILED DESCRIPTION

In order to clearly explain the technical features of the solution, the present invention will be described in detail below through specific implementations with reference to accompanying drawings.

Degree of substitution (DS) by carboxymethyl in the starch ether prepared in each of examples and comparative examples is determined by the following method.

The fully-washed starch ether sample without Cl⁻ is dried, slowly heated to 700°C in a muffle furnace, and burned for 1 h to completely ash the sample and quantitatively convert it to Na2O. The ash is dissolved in a sulfuric acid standard solution for quantification, and then excess sulfuric acid is titrated with a NaOH standard solution. Degree of substitution by carboxymethyl of starch ether is calculated according to formula (1):

$$DS = 0.162B/(1\text{-}0.08B)\ (1).$$

In formula (1), B is the millimolar quantity of $1/2H_2SO_4$ consumed per gram of sample, and it is calculated according to formula (2):

$$B = (C(1/2H_2SO_4) \times V(1/2H_2SO_4) \text{ -C NaOH} \times V\ NaOH)/W\ (2)$$

In formula (2),

$C(1/2H_2SO_4)$: molar concentration of the sulfuric acid used, mol/L;

$V(1/2H_2SO_4)$: volume of the sulfuric acid used, mL;

C NaOH: molar concentration of the sodium hydroxide solution used, mol/L;

V NaOH: volume of the sodium hydroxide solution used, mL; and

W: mass of the starch ether sample dried to constant weight, g.

The content of methoxy and hydroxyalkoxy in starch ether and cellulose ether prepared in examples and comparative examples is determined according to methods for determining the content of groups in cellulose ether in Appendix D of JC/T2190-2013 "Cellulose Ether for the Dry-Mixed Mortar". Alkoxy and hydroxyalkoxy are quantitatively cleaved by hydroiodic acid under the catalyzation of adipic acid, and then the content of alkoxy and hydroxyalkoxy in starch ether and cellulose ether is determined by gas chromatography.

The viscosity of starch ether prepared in each example is measured in a 5% aqueous solution at 20°C with an NDJ-1 viscometer, and the viscosity of cellulose ether is measured in a 2% aqueous solution at 20°C with a B-type RVT viscometer.

### Example 1

A preparation method of modified starch ether for improving the open time of a ceramic tile adhesive includes the following steps:

(1) Chemical modification: etherifying, drying and grinding starch.

Starch, alkalizer, alcohol and inhibitor were added to a jacketed reactor with a stirrer in sequence. The reactor was evacuated and purged with nitrogen to remove oxygen, and then evacuated once again. Etherifying agents were added, and the reaction solution was heated. At the end of reaction, the alcohol was recovered, and the product was dried and ground.

The starch was tapioca starch; the alkalizer was NaOH; the alcohol was ethanol; the inhibitor was $Na_2SO_4$; and the etherifying agent was chloroacetic acid, propylene oxide, and ethylene oxide.

The etherification was conducted at 20°C for 1.5 h, at 40°C for 2.5 h, and at 60°C for 4 h.

The starch, sodium hydroxide, chloroacetic acid, propylene oxide and ethylene oxide were used at a mass ratio of 1:0.09:0.10:0.18:0.02.

The starch and inhibitor were used at a mass ratio of 1:0.05.

The starch and alcohol were used at a mass ratio of 1:0.3.

The prepared carboxymethyl hydroxypropyl hydroxyethyl starch has a degree of substitution by carboxymethyl of 0.17 and a viscosity of 8,000 cp in a 5% aqueous solution, and includes 16.5% of hydroxypropoxy, 2.5% of hydroxyethoxy, and 16% of ash.

(2) Physical modification: mixing the starch ether obtained in (1), thickener, retarder and water reducer.

The carboxymethyl hydroxypropyl hydroxyethyl starch obtained in (1), thickener, retarder and water reducer were added to a blender for 40 min to 60 min of mixing to obtain modified carboxymethyl hydroxypropyl hydroxyethyl starch.

The modified carboxymethyl hydroxypropyl hydroxyethyl starch, thickener, retarder and water reducer were used at a mass percentage content of 30%, 67%, 2% and 1% respectively.

The thickener was hydroxyethyl methyl cellulose (methoxy content: 19.0% to 24.0%, hydroxyethoxy content: 4.0% to 12.0%, viscosity measured in a 2% aqueous solution with a B-type RVT viscometer: 60,000 cp, purchased from Shandong Yiteng New Materials Co., Ltd.); the retarder was sodium lignosulfonate; and the water reducer was polycarboxylate water reducer in the form of power.

The modified carboxymethyl hydroxypropyl hydroxyethyl starch prepared in Example 1 was used for the preparation of a ceramic tile adhesive. Components shown in Table 1 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 2.

**Comparative Example 1**

A preparation method of modified starch ether for improving the open time of a ceramic tile adhesive includes the following steps:

(1) YT-A03 hydroxypropyl starch (purchased from Shandong Yiteng New Materials Co., Ltd., hydroxypropoxy content: 18.0% to 21.0%, viscosity measured in a 5% aqueous solution: 3,000 cp to 4,000 cp, ash content: ≤ 10%) was used without chemical modification.

(2) The starch ether in (1), thickener, retarder and water reducer were mixed.

YT-A03 hydroxypropyl starch, thickener, retarder and water reducer were added to a blender for 40 min to 60 min of mixing to obtain 1# modified hydroxypropyl starch.

YT-A03 hydroxypropyl starch, thickener, retarder and water reducer were used at the same mass percentage content as that in Example 1.

The thickener, retarder and water reducer were the same as in Example 1.

The modified starch ether prepared in Comparative Example 1 was used for the preparation of a ceramic tile adhesive. Components shown in Table 1 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 2.

Table 1 The formulas for ceramic tile adhesives using the products of Example 1 and Comparative Example 1

| Component | Comparative Example 1 | Example 1 |
|---|---|---|
| Cement 42.5 | 400 g | 400 g |
| Fine sand | 450 g | 450 g |
| Heavy calcium carbonate | 121.5 g | 121.5 g |

(continued)

| Component | Comparative Example 1 | Example 1 |
|---|---|---|
| Redispersible latex powder | 20 g | 20 g |
| Calcium formate | 3.5 g | 3.5 g |
| Lignocellulose | 1 g | 1 g |
| 1# modified hydroxypropyl starch | 4 g | |
| Modified carboxymethyl hydroxypropyl hydroxyethyl starch | | 4 g |

Table 2 Properties for ceramic tile adhesives using the products of Example 1 and Comparative Example 1

| Example | Original tensile adhesive strength/MP a | Tensile adhesive strength after soaking water/MP a | Tensile adhesive strength after thermal aging/MP a | Tensile adhesive strength after a cycle of freezing and thawing/MP a | Tensile adhesive strength after 20 min of standing/MP a | Tensile adhesive strength after 40 min of standing/MP a | Tensile adhesive strength after 60 min of standing/MP a |
|---|---|---|---|---|---|---|---|
| Comparative Example 1 | 1.018 | 0.655 | 0.822 | 0.764 | 0.742 | 0.425 | 0.204 |
| Example 1 | 1.056 | 0.680 | 0.866 | 0.818 | 0.796 | 0.566 | 0.378 |

It can be seen from Table 2 that the modified carboxymethyl hydroxypropyl hydroxyethyl starch prepared in the present invention can significantly extend the open time of a ceramic tile adhesive, resulting in an open time longer than 40 min which is higher than the standard requirement of 30 min. Moreover, other requirements for the binding property of a ceramic tile adhesive are met. The ceramic tile adhesive of the present invention is even superior to the ceramic tile adhesive including 1# modified hydroxypropyl starch in terms of properties, such as the original tensile adhesive strength, the tensile adhesive strength after soaking in water, the tensile adhesive strength after thermal aging and the tensile adhesive strength after a cycle of freezing and thawing in Table 2.

**Example 2**

A preparation method of modified starch ether for improving the open time of a ceramic tile adhesive includes the following steps:

(1) Another starch ether of the present invention was prepared according to the description in step (1) of Example 1 except that the etherifying agents were chloroacetic acid and propylene oxide, starch, sodium hydroxide, chloroacetic acid and propylene oxide were used at a mass ratio of 1:0.09:0.10:0.18, and etherification was conducted at 35°C for 2 h, at 50°C for 3 h, and at 65°C for 4h.
The prepared carboxymethyl hydroxypropyl starch has a degree of substitution by carboxymethyl of 0.16 and a viscosity of 7,000 cp in a 5% aqueous solution, and includes 16.5% of hydroxypropoxy and 16% of ash.
(2) Physical modification: the starch ether obtained in step (1), thickener, retarder and water reducer were mixed.

The carboxymethyl hydroxypropyl starch, thickener, retarder and water reducer were added to a blender for 40 min to 60 min of mixing to obtain modified carboxymethyl hydroxypropyl starch.
The carboxymethyl hydroxypropyl starch, thickener, retarder and water reducer were used at a mass percentage content of 25%, 72%, 1.5% and 1.5% respectively.
The thickener was hydroxyethyl methyl cellulose (methoxy content: 19.0% to 24.0%, hydroxyethoxy content: 4.0% to 12.0%, viscosity measured in a 2% aqueous solution with a B-type RVT viscometer: 50,000 cp, purchased from Shandong Yiteng New Materials Co., Ltd.); the retarder was sodium lignosulfonate; and the water reducer was polycarboxylate water reducer in the form of power.
Preparation of a ceramic tile adhesive: Modified carboxymethyl hydroxypropyl starch was prepared at an amount shown in Table 3 according to the above method. Components shown in Table 3 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 4.

**Comparative Example 2**

A preparation method of modified starch ether for improving the open time of a ceramic tile adhesive includes the following steps:

(1) YT-B03 hydroxypropyl starch (purchased from Shandong Yiteng New Materials Co., Ltd., hydroxypropoxy content: 11.0% to 14.0%, viscosity measured in a 5% aqueous solution: 3,000 cp to 4,000 cp, ash content: ≤ 10%) was used without chemical modification.

(2) The starch ether in (1), thickener, retarder and water reducer were mixed.

Starch ether, thickener, retarder and water reducer were added to a blender for 40 min to 60 min of mixing to obtain 2# modified hydroxypropyl starch.
Starch ether, thickener, retarder and water reducer were used at the same mass percentage content as that in Example 2.
The starch ether was the hydroxypropyl starch described in step (1) of Comparative Example 2. The thickener, retarder and water reducer were the same as in Example 2.
The modified starch ether prepared in Comparative Example 2 was used for the preparation of a ceramic tile adhesive. Components shown in Table 3 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 4.

Table 3 The formulas for ceramic tile adhesives using the products of Example 2 and Comparative Example 2

| Component | Comparative Example 2 | Example 2 |
|---|---|---|
| Cement 42.5 | 400 g | 400 g |
| Fine sand | 450 g | 450 g |
| Heavy calcium carbonate | 121.5 g | 121.5 g |
| Redispersible latex powder | 20 g | 20 g |
| Calcium formate | 3.5 g | 3.5 g |
| Lignocellulose | 1 g | 1 g |
| 2# modified hydroxypropyl starch | 4 g | |
| Modified carboxymethyl hydroxypropyl starch | | 4 g |

Table 4 Properties for ceramic tile adhesives using the products of Example 2 and Comparative Example 2

| Example | Original tensile adhesive strength/MPa | Tensile adhesive strength after soaking in water/MPa | Tensile adhesive strength after thermal aging/MPa | Tensile adhesive strength after a cycle of freezing and thawing/MPa | Tensile adhesive strength after 20 min of standing/MPa | Tensile adhesive strength after 30 min of standing/MPa | Tensile adhesive strength after 40 min of standing/MPa |
|---|---|---|---|---|---|---|---|
| Comparative Example 2 | 0.948 | 0.595 | 0.784 | 0.729 | 0.682 | 0.465 | 0.353 |
| Example 2 | 1.006 | 0.642 | 0.825 | 0.786 | 0.754 | 0.558 | 0.426 |

It can be seen from Table 4 that the modified carboxymethyl hydroxypropyl starch prepared in the present invention can significantly extend the open time of a ceramic tile adhesive, resulting in an open time longer than 30 min which is higher than the standard requirement of 30 min. Moreover, other requirements for the binding property of a ceramic tile adhesive are met. The ceramic tile adhesive of the present invention is even superior to the ceramic tile adhesive including 2# modified hydroxypropyl starch in terms of properties, such as the original tensile adhesive strength, the tensile adhesive strength after soaking in water, the tensile adhesive strength after thermal aging and the tensile adhesive strength after a cycle of freezing and thawing in Table 4.

**Example 3**

A preparation method of modified starch ether for improving the open time of a ceramic tile adhesive includes the following steps:

(1) Another starch ether of the present invention was prepared according to the description in step (1) of Example 1 except that the etherifying agents were propylene oxide and ethylene oxide, starch, sodium hydroxide, propylene oxide and ethylene oxide were used at a mass ratio of 1:0.02:0.30:0.02, and etherification was conducted at 30°C for 2 h, at 50°C for 4 h, and 70°C for 4h.
The prepared 1# hydroxypropyl hydroxyethyl starch has a viscosity of 9,000 cp in a 5% aqueous solution, and includes 25.0% of hydroxypropoxy, 2.5% of hydroxyethoxy, and 8% of ash.
(2) Physical modification: the starch ether obtained in step (1), thickener, retarder and water reducer were mixed.

1# hydroxypropyl hydroxyethyl starch, thickener, retarder and water reducer were added to a blender for 40 min to 60 min of mixing to obtain 1# modified hydroxypropyl hydroxyethyl starch.
The 1# hydroxypropyl hydroxyethyl starch, thickener, retarder and water reducer were used at a mass percentage content of 25%, 72%, 2% and 1% respectively.

The thickener was hydroxypropyl methyl cellulose (methoxy content: 28.0% to 30.0%, hydroxypropoxy content: 7.5% to 12.0%, viscosity measured in a 2% aqueous solution with a B-type RVT viscometer: 50,000 cp, purchased from Shandong Yiteng New Materials Co., Ltd.); the retarder was sodium lignosulfonate; and the water reducer was polycarboxylate water reducer in the form of power.

The 1# modified hydroxypropyl hydroxyethyl starch prepared in Example 3 was used for the preparation of a ceramic tile adhesive. Components shown in Table 5 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 6.

**Comparative Example 3**

A preparation method of modified starch ether for improving the open time of a ceramic tile adhesive includes the following steps:

(1) YT-A03 hydroxypropyl starch (purchased from Shandong Yiteng New Materials Co., Ltd., hydroxypropoxy content: 18.0% to 21.0%, viscosity measured in a 5% aqueous solution: 3,000 cp to 4,000 cp, ash content: ≤ 10%) was used without chemical modification.

(2) YT-A03 hydroxypropyl starch in (1), thickener, retarder and water reducer were mixed. Starch ether, thickener, retarder and water reducer were added to a blender for 40 min to 60 min of mixing to obtain 3# modified hydroxypropyl starch.

YT-A03 hydroxypropyl starch, thickener, retarder and water reducer were used at the same mass percentage content as that in Example 3.
The thickener, retarder and water reducer were the same as in Example 3.
The 3# modified hydroxypropyl starch prepared in Comparative Example 3 was used for the preparation of a ceramic tile adhesive. Components shown in Table 5 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 6.

Table 5 The formulas for ceramic tile adhesives using the products of Example 3 and Comparative Example 3

| Component | Comparative Example 3 | Example 3 |
|---|---|---|
| Cement 42.5 | 400 g | 400 g |
| Fine sand | 450 g | 450 g |
| Heavy calcium carbonate | 121.5 g | 121.5 g |
| Redispersible latex powder | 20 g | 20 g |
| Calcium formate | 3.5 g | 3.5 g |
| Lignocellulose | 1 g | 1 g |
| 3# modified hydroxypropyl starch | 4 g | |
| 1# modified hydroxypropyl hydroxyethyl starch | | 4 g |

Table 6 Properties for ceramic tile adhesives using the products of Example 3 and Comparative Example 3

| Example | Original tensile adhesive strength/MPa | Tensile adhesive strength after soaking in water/MPa | Tensile adhesive strength after thermal aging/MPa | Tensile adhesive strength after a cycle of freezing and thawing/MPa | Tensile adhesive strength after 20 min of standing/MPa | Tensile adhesive strength after 40 min of standing/MPa | Tensile adhesive strength after 60 min of standing/MPa |
|---|---|---|---|---|---|---|---|
| Comparative Example 3 | 1.005 | 0.656 | 0.816 | 0.761 | 0.743 | 0.420 | 0.206 |
| Example 3 | 1.042 | 0.668 | 0.846 | 0.772 | 0.754 | 0.535 | 0.322 |

It can be seen from Table 6 that 1# modified hydroxypropyl hydroxyethyl starch prepared in the present invention can significantly extend the open time of a ceramic tile adhesive, resulting in an open time longer than 40 min which is higher than the standard requirement of 30 min. Moreover, other requirements for the binding property of a ceramic tile adhesive are met. The ceramic tile adhesive of the present invention is even superior to the ceramic tile adhesive including 3# modified hydroxypropyl starch in terms of properties, such as the original tensile adhesive strength, the tensile adhesive strength after soaking in water, the tensile adhesive strength after thermal aging and the tensile adhesive strength after a cycle of freezing and thawing in Table 6.

**Example 4**

A preparation method of modified starch ether for improving the open time of a ceramic tile adhesive includes the following steps:

(1) Another starch ether of the present invention was prepared according to the description in step (1) of Example 1 except that the etherifying agents were propylene oxide and ethylene oxide, starch, sodium hydroxide, propylene oxide and ethylene oxide were used at a mass ratio of 1:0.02:0.27:0.02, and etherification was conducted at 25°C for 2 h, at 45°C for 3 h, and at 65°C for 5 h.
The prepared 2# hydroxypropyl hydroxyethyl starch has a viscosity of 9,000 cp in a 5% aqueous solution, and includes 22.5% of hydroxypropoxy, 2.5% of hydroxyethoxy, and 8% of ash.
(2) Physical modification: the starch ether obtained in step (1), thickener, retarder and water reducer were mixed.

2# hydroxypropyl hydroxyethyl starch, thickener, retarder and water reducer were added to a blender for 40 min to 60 min of mixing to obtain 2# modified hydroxypropyl hydroxyethyl starch.
The 2# hydroxypropyl hydroxyethyl starch, thickener, retarder and water reducer were used at a mass percentage content of 20%, 77%, 1.5% and 1.5% respectively.
The thickener was hydroxypropyl methyl cellulose (methoxy content: 19.0% to 24.0%, hydroxypropoxy content: 4.0% to 12.0%, viscosity measured in a 2% aqueous solution with a B-type RVT viscometer: 40,000 cp, purchased from Shandong Yiteng New Materials Co., Ltd.); the retarder was sodium lignosulfonate; and the water reducer was polycarboxylate water reducer in the form of power.
The 2# modified hydroxypropyl hydroxyethyl starch prepared in Example 4 was used for the preparation of a ceramic tile adhesive. Components shown in Table 7 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 8.

**Comparative Example 4**

A preparation method of modified starch ether for improving the open time of a ceramic tile adhesive includes the following steps:

(1) YT-B03 hydroxypropyl starch (purchased from Shandong Yiteng New Materials Co., Ltd., hydroxypropoxy content: 11.0% to 14.0%, viscosity measured in a 5% aqueous solution: 3,000 cp to 4,000 cp, ash content: ≤ 10%) was used without chemical modification.

(2) The starch ether in (1), thickener, retarder and water reducer were mixed.

YT-B03 hydroxypropyl starch, thickener, retarder and water reducer were added to a blender for 40 min to 60 min of mixing to obtain 4# modified hydroxypropyl starch.
YT-B03 hydroxypropyl starch, thickener, retarder and water reducer were used at the same mass percentage content as that in Example 4.
The thickener, retarder and water reducer were the same as in Example 4.
The 4# modified hydroxypropyl starch prepared in Comparative Example 4 was used for the preparation of a ceramic tile adhesive. Components shown in Table 7 were added to a blender and thoroughly mixed, and then 26% of water, based on the total weight of all components, was added. The resulting mixture was mixed with the mixing equipment and mixing method required in JC/T547-2005 "Ceramic Tile Adhesive", and various performance tests were conducted according to the standard. The results are shown in Table 8.

Table 7 The formulas for ceramic tile adhesives using the products of Example 4 and Comparative Example 4

| Component | Comparative Example 4 | Example 4 |
|---|---|---|
| Cement 42.5 | 400 g | 400 g |
| Fine sand | 450 g | 450 g |
| Heavy calcium carbonate | 121.5 g | 121.5 g |
| Redispersible latex powder | 20 g | 20 g |
| Calcium formate | 3.5 g | 3.5 g |
| Lignocellulose | 1 g | 1 g |
| 4# modified hydroxypropyl starch | 4 g | |
| 2# modified hydroxypropyl hydroxyethyl starch | | 4 g |

Table 8 Properties for ceramic tile adhesives using the products of Example 4 and Comparative Example 4

| Example | Original tensile adhesive strength/MPa | Tensile adhesive strength after soaking in water/MPa | Tensile adhesive strength after thermal aging/MPa | Tensile adhesive strength after a cycle of freezing and thawing/MPa | Tensile adhesive strength after 20 min of standing/MPa | Tensile adhesive strength after 30 min of standing/MPa | Tensile adhesive strength after 40 min of standing/MPa |
|---|---|---|---|---|---|---|---|
| Comparative Example 4 | 0.983 | 0.605 | 0.783 | 0.732 | 0.679 | 0.457 | 0.339 |
| Example 4 | 1.002 | 0.638 | 0.849 | 0.795 | 0.766 | 0.562 | 0.443 |

It can be seen from Table 8 that 2# modified hydroxypropyl hydroxyethyl starch prepared in the present invention can significantly extend the open time of a ceramic tile adhesive, resulting in an open time longer than 30min which is higher than the standard requirement of 30 min. Moreover, other requirements for the binding property of a ceramic tile adhesive are met. The ceramic tile adhesive of the present invention is even superior to the ceramic tile adhesive including 4# modified hydroxypropyl starch in terms of properties, such as the original tensile adhesive strength, the tensile adhesive strength after soaking in water, the tensile adhesive strength after thermal aging and the tensile adhesive strength after a cycle of freezing and thawing in Table 8. The above implementations should not be considered as a limitation on the protection scope of the present invention. It should be appreciated by those skilled in the art that any alternative improvement or change made to the implementations of the present invention falls within the protection scope of the present invention.

Anything that is not detailed in the present invention is a well-known technique of those skilled in the art.

**Claims**

1.  A preparation method of modified starch ether for improving the open time of a ceramic tile adhesive, comprising the following steps:

    (1) chemical modification
    mixing starch, alkalizer, alcohol and inhibitor, then adding a plurality of etherifying agents, and conducting etherification at 10°C to 90°C for 2 h to 20 h to achieve the chemical modification and obtain starch ether; and
    (2) physical modification
    mixing the starch ether obtained in step (1), thickener, retarder and water reducer for a certain period of time to achieve the physical modification.

**2.** The preparation method of modified starch ether for improving the open time of a ceramic tile adhesive according to claim 1, wherein etherification is conducted at 15°C to 85°C for 4 h to 12 h.

**3.** The preparation method of modified starch ether for improving the open time of a ceramic tile adhesive according to claim 1, wherein the starch, the alkalizer and the etherifying agent are used in etherification at a mass ratio of 1:(0.01-1.5):(0.02-1.75), and preferably, at a mass ratio of 1:(0.01-1):(0.02-1.2); the starch and the inhibitor are used in etherification at a mass ratio of 1:(0.05-0.1); and the starch and the alcohol are used in etherification at a mass ratio of 1:(0.1-2), and preferably, at a mass ratio of 1:(0.2-1).

**4.** The preparation method of modified starch ether for improving the open time of a ceramic tile adhesive according to claim 1, wherein the physical modification is conducted by mixing the starch ether, thickener, retarder and water reducer for 40 min to 60 min.

**5.** The preparation method of modified starch ether for improving the open time of a ceramic tile adhesive according to claim 4, wherein the starch ether, thickener, retarder and water reducer, in percentage by weight, are 5% to 40%, 56% to 94%, 0.5% to 2%, and 0.5% to 2% respectively, preferably, 10% to 30%, 56% to 88%, 1.0% to 2.0 %, and 1.0% to 2.0% respectively, and more preferably, 20% to 30%, 56% to 78%, 1.0% to 2.0%, and 1.0% to 2.0% respectively.

**6.** The preparation method of modified starch ether for improving the open time of a ceramic tile adhesive according to claim 4, wherein the starch ether is one or more of monosubstituted starch ether, disubstituted starch ether, and trisubstituted starch ether, and preferably disubstituted starch ether and/or trisubstituted starch ether; the thickener is one or more of carboxymethyl cellulose, methyl cellulose, hydroxypropyl methyl cellulose, hydroxyethyl methyl cellulose, and hydroxyethyl cellulose, and preferably hydroxypropyl methyl cellulose and/or hydroxyethyl methyl cellulose; the retarder is one or more of sodium lignosulfonate, sugar calcium and sodium citrate, and preferably sodium lignosulfonate; and the water reducer is one or more of naphthalene, aliphatic and polycarboxylate water reducers in the form of power, and preferably a polycarboxylate water reducer in the form of power.

**7.** The preparation method of modified starch ether for improving the open time of a ceramic tile adhesive according to claim 1, wherein the starch is one or more of corn starch, tapioca starch, potato starch, and wheat starch, preferably one or more of corn starch, tapioca starch, and potato starch, and more preferably tapioca starch; the alkalizer is alkali metal hydroxide powder, preferably NaOH and/or KOH, and more preferably NaOH; the alcohol is one or more of methanol, ethanol, isopropanol, n-butanol, tert-butanol, acetone, and diethylene glycol, preferably ethanol and/or isopropanol, and more preferably ethanol; the inhibitor is an alkali metal salt, preferably $Na_2SO_4$ and/or NaCl, and more preferably $Na_2SO_4$; and the etherifying agent is one or more of chloroacetic acid or sodium chloroacetate, methyl chloride, ethyl chloride, propylene oxide, and ethylene oxide, and preferably one or more of chloroacetic acid, propylene oxide, and ethylene oxide.

**8.** Modified starch ether prepared by the preparation method according to any one of claims 1 to 7.

**9.** Use of the modified starch ether according to claim 8 in the preparation of a ceramic tile adhesive.

**10.** The use according to claim 9, wherein the modified starch ether weighs 0.2% to 0.5%, and preferably 0.3% to 0.5%, of the ceramic tile adhesive.

FIG. 1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 369 082 A (MIANYANG RUILONG BUILDING MAT CO LTD) 22 February 2019 (2019-02-22) * claim 1 * ----- | 1-10 | INV. C08B31/08 C04B24/38 C08B31/12 C08L3/08 |

TECHNICAL FIELDS
SEARCHED (IPC)

C08B
C04B
C08L

The present search report has been drawn up for all claims

| Place of search | Date of completion of the search | Examiner |
|---|---|---|
| Munich | 30 October 2020 | Pellegrini, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 2236

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | Publication date | Patent family member(s) | Publication date |
|---|---|---|---|
| CN 109369082 A | 22-02-2019 | NONE | |

For more details about this annex : see Official Journal of the European Patent Office, No. 12/82

**REFERENCES CITED IN THE DESCRIPTION**

**Patent documents cited in the description**

- CN 107573539 A